Europäisches Patentamt

European Patent Office

Office européen des brevets

(19)

(11) **EP 1 205 731 A1**

(12) **EUROPÄISCHE PATENTANMELDUNG**

(43) Veröffentlichungstag:
**15.05.2002 Patentblatt 2002/20**

(51) Int Cl.⁷: **G01C 21/00**, G06T 11/20

(21) Anmeldenummer: **01125285.5**

(22) Anmeldetag: **25.10.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **07.11.2000 DE 10055156**

(71) Anmelder: **BECKER GmbH
76307 Karlsbad (DE)**

(72) Erfinder: **Nagel, Philipp Harald
21220 Seevetal (DE)**

(74) Vertreter: **Patentanwälte
Westphal, Mussgnug & Partner
Waldstrasse 33
78048 Villingen-Schwenningen (DE)**

(54) **Verfahren zur Erzeugung einer Navigationskarte und Navigationskarte**

(57)    Um eine Navigationskarte für ein Navigationsgerät genauer und wirklichkeitsgetreuer mit weniger
Speicherkapazität darstellen zu können, werden Strassen, Wege, Bahnlinien, Flüsse, Seen und ähnliche kartographische Parameter nicht aus Geraden sondern
aus Klotoiden zusammengesetzt. Eine Klotoide ist
durch ihre Krümmung und ihre Länge definiert.

Fig.1

EP 1 205 731 A1

**Beschreibung**

Die Erfindung betrifft ein Verfahren zur Erzeugung einer Navigationskarte für ein Navigationsgerät. Die Erfindung betrifft weiter eine Navigationskarte für ein Navigationsgerät.

Auf einer Navigationskarte, die auf dem Bildschirm eines Navigationsgerätes dargestellt wird, sind die Strassen und Wege aus geraden Linien zusammengesetzt. Diese Art der kartographischen Wiedergabe ist aber mit einer Reihe von Nachteilen behaftet.

Weil Strassen und Wege, aber auch z. B. Flüsse in Wirklichkeit nicht aus geraden Teilstücken zusammengesetzt sind, wie dies auf einer Navigationskarte der Fall ist, lässt die Genauigkeit der Navigationskarte zu wünschen übrig. Außerdem ist die Wiedergabe der Strassen und Wege nicht wirklichkeitsgetreu. Je genauer die Navigationskarte aufgebaut ist, desto kleinere und desto mehr gerade Teilstücke sind zur Darstellung einer Strasse oder eines Weges erforderlich, was einen sehr hohen Speicherbedarf bedingt.

Es ist daher Aufgabe der Erfindung, ein Verfahren zur Erzeugung einer Navigationskarte so zu gestalten, dass einerseits der Speicherbedarf zur Speicherung der Parameter der Navigationskarte reduziert wird und andererseits trotz geringeren Speicherbedarfs die Genauigkeit der Navigationskarte wesentlich erhöht wird.

Verfahrenmäßig wird diese Aufgabe mit den im Anspruch 1 angegebenen Merkmalen dadurch gelöst, dass Strassen, Wege, Bahnlinien, Flüsse, Seen und dergleichen aus Klotoiden zusammengesetzt werden.

Vorrichtungsmäßig wird diese Aufgabe mit den im Anspruch 6 angegebenen Merkmalen dadurch gelöst, dass auf der Navigationskarte Strassen, Wege, Bahnlinien, Flüsse, Seen und dergleichen aus Klotoiden zusammengesetzt sind.

Anstatt Strassen, Wege, Bahnlinien, Flüsse und ähnliche kartographische Parameter durch Aneinanderreihen von Geraden darzustellen, sieht die Erfindung vor, diese kartographischen Parameter aus Klotoiden zusammenzusetzen.

Eine Klotoide ist als eine Kurve definiert, deren Krümmung proportional zur Streckenlänge ist.

Eine Klotoide wird nach folgenden Formeln berechnet:

$$1. \quad l = K \cdot a^2$$

Wobei l die Streckenlänge und K die Krümmung bezeichnet.

In Parameterform lauten die Gleichungen einer Klotoide folgendermaßen:

$$2. \quad x = a\sqrt{\pi} \int\limits_{t=0}^{t} \cos\left(\frac{\pi}{2}\tau^2\right) \, d\tau$$

$$3. \quad y = a\sqrt{\pi} \int\limits_{\tau=0}^{t} \sin\left(\frac{\pi}{2}\tau^2\right) \, d\tau$$

$$4. \quad \text{mit } t = \frac{1}{a\sqrt{\pi}} l$$

Weil diese Integrale nicht lösbar sind, sieht ein Ausführungsbeispiel der Erfindung eine Reihenentwicklung nach Taylor vor.

$$5. \quad X_K(t) = a \cdot \sqrt{\pi}\left(+\frac{1}{0!}\frac{\pi^0}{2^0}\frac{1}{1}t^1 - \frac{1}{2!}\frac{\pi^2}{2^2}\frac{1}{5}t^5 + \frac{1}{4!}\frac{\pi^4}{2^4}\frac{1}{9}t^9 - \frac{1}{6!}\frac{\pi^6}{2^6}\frac{1}{13}t^{13} + - + \right)$$

$$6. \qquad Y_K\,(t){=}a\cdot\sqrt{\pi}(+\frac{1}{1!}\frac{\pi^1}{2^1}\frac{1}{3}t^3-\frac{1}{3!}\frac{\pi^3}{2^3}\frac{1}{7}t^7+\frac{1}{5!}\frac{\pi^5}{2^5}\frac{1}{11}t^{11}-\frac{1}{7!}\frac{\pi^7}{2^7}\frac{1}{15}t^{15}+\text{-}+)$$

Die Reihenentwicklung wird nach einem vorgebbaren Glied abgebrochen, so dass ein Polynom übrig bleibt. Die Glieder der Polynome werden vorzugsweise in einer Tabelle gespeichert.

Weil sich alle Klotoiden ähnlich sind gibt es eine Einheitsklotoide mit dem Parameter a=1. Ein Ausführungsbeispiel sieht vor, die Glieder der Polynome der Einheitsklotoide in einer Tabelle zu speichern und aus diesen Werten aktuelle Klotoiden zu berechnen. Ein Ausführungsbeispiel sieht vor, die Koordinaten der Einheitsklotoide in einer Tabelle zu speichern und aus diesen Werten aktuelle Klotoiden zu berechnen.

Gegenüber der herkömmlichen Darstellung von Strassen und Wegen mittels aneinandergereihten geraden Linien erzielt die erfindungsgemäße Darstellung mittels Klotoiden zahlreiche Vorteile.

Die Genauigkeit der Abbildung wird wesentlich erhöht, weil eine genau Position nicht nur an den Punkten gegeben ist, wo zwei gerade Linien aneinanderstoßen, sondern über den gesamten Kurvenverlauf. Die Wiedergabe von Strassen, Wegen, Flüssen und dergleichen ist wesentlich wirklichkeitsgetreuer.

Für die Darstellung der angeführten kartographischen Parameter mittels Klotoiden sind weniger Parameter zu speichern als bei der bisher üblichen Darstellung mittels Punkten und aneinandergereihten geraden Linien. Deshalb wird in einem Navigationsgerät, das die erfindungsgemäße Navigationskarte erzeugt, erheblich Speicherplatz eingespart.

Weil eine Navigationskarte mit Klotoidendarstellung den tatsächlichen Verlauf von Straßen, Wegen und dergleichen wesentlich genauer angibt als eine Darstellung mit aneinandergereihten geraden Linien wird die Standortbestimmung erheblich verbessert. So lässt sich z. B. der mittels Sensoren gemessene Verlauf einer befahrenen Strasse leichter in einer Navigationskarte mit Klotoidendarstellung wiederfinden, weil alle Parameter über den gesamten Kurvenverlauf berechenbar sind.

Eine Navigationskarte in Klotoidendarstellung ist sowohl zum Navigieren als auch zur Darstellung geeignet. Es sind daher in einem Navigationsgerät, das die erfindungsgemäße Navigationskarte erzeugt nicht mehr wie üblich zwei Navigationskarten erforderlich. Die eine der beiden Navigationskarten dient beim Stand der Technik zum Navigieren, während die andere der Darstellung dient.

Prädiktive Streckendaten beschreiben den zukünftigen Streckenverlauf z. B. der folgenden 1 bis 2 Kilometer. Sie lassen sich zum Beispiel bei der Darstellung mittels Klotoiden unmittelbar aus der Navigationskarte entnehmen und müssen nicht Online berechnet werden, wodurch Rechenzeit eingespart wird.

Weil in Deutschland und auch in anderen Ländern, wo immer die Geographie es erlaubt, Strassen wegen der höheren Verkehrsicherheit als Klotoiden gebaut werden, ist die erfindungsgemäße Darstellung mittels Klotoiden besonders wirklichkeitsgetreu. Die Qualität der Darstellung kommt bei der erfindungsgemäßen Navigationskarte bereits der einer Luftaufnahme nahe.

Anhand der in den Figuren dargestellten Kurvenverläufe werden das Prinzip der erfindungsgemäßen Navigationskarte sowie die wesentlichen Unterschiede zum Stand der Technik erläutert.

In der Zeichnung zeigen:

Figur 1     eine Strasse in Klotoidendarstellung und

Figur 2     dieselbe Strasse in der üblichen Darstellung mittels Geraden.

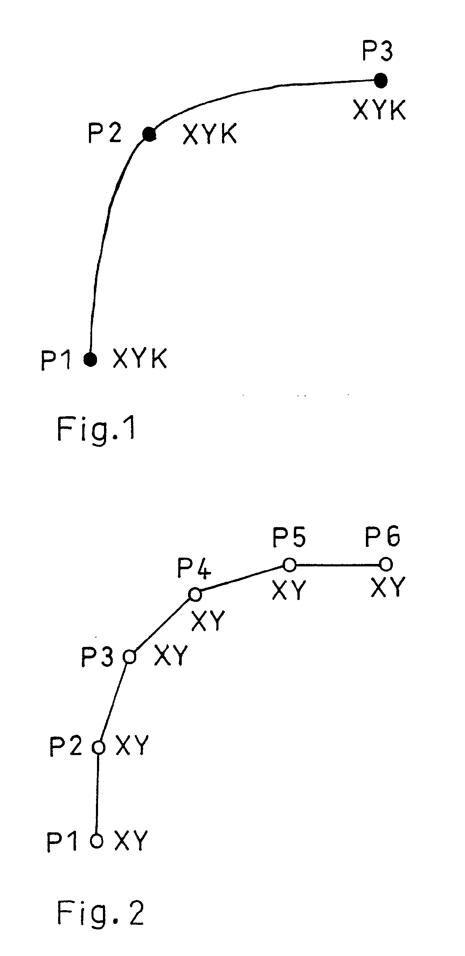

In der Figur 2 ist ein Stück einer Strasse durch fünf Geraden und sechs Punkte dargestellt, während in Figur 1 dieselbe Strasse mittels nur zwei Klotoiden und drei Punkten dargestellt ist. Trotz der Darstellung mit nur zwei Klotoiden und drei Punkten ist die in Figur 1 gezeigte erfindungsgemäße Darstellung wesentlich genauer und wirklichkeitsgetreuer als die übliche in Figur 2 abgebildete Darstellung mit fünf Geraden und sechs Punkten. Für die sechs Punkte P1 bis P6 sind beim Stand der Technik sechs x-Koordinaten und sechs y-Koordinaten, also insgesamt 12 Koordinaten, erforderlich, während bei der erfindungsgemäßen Darstellung in Figur 1 nur die x- und y-Koordinanten von drei Punkten und die Krümmung K für die drei Punkte P1 bis P3 erforderlich sind. Die Erfindung benötigt daher nur neun Koordinaten.

Die Erfindung zeichnet sich durch den Vorteil aus, dass trotz einer erheblichen Reduzierung der Speicherkapazität eine wesentlich bessere, genauere und wirklichkeitsgetreuere Darstellung erzielt wird.

**Patentansprüche**

**1.** Verfahren zur Erzeugung einer Navigationskarte für ein Navigationsgerät, **dadurch gekennzeichnet dass** Strassen, Wege, Bahnlinien, Flüsse, Seen und ähnliche kartographische Parameter aus Klotoiden zusammengesetzt werden.

2. Verfahren nach Anspruch 1, **dadurch gekennzeichnet, dass** die Klotoiden nach den Gleichungen

$$1. \qquad l=K{\cdot}a^2$$

$$2. \quad x = a\sqrt{\pi} \int_{\tau=0}^{t} \cos(\frac{\pi}{2}\tau^2) \ \mathrm{d}\tau$$

$$3. \quad y = a\sqrt{\pi} \int_{\tau=0}^{t} \sin(\frac{\pi}{2}\tau^2)\,\mathrm{d}\ \tau$$

mit

$$4. \qquad t= \frac{1}{a\sqrt{\pi}}l$$

berechnet werden.

3. Verfahren nach Anspruch 2, **dadurch gekennZeichnet, dass** zur Berechnung der Klotoiden eine Reihenentwicklung der Gleichungen

$$5. \qquad X_K(t) = a{\cdot}\sqrt{\pi}(+\frac{1}{0!}\frac{\pi^0}{2^0}\frac{1}{1}t^1 -\frac{1}{2!}\frac{\pi^2}{2^2}\frac{1}{5}t^5 +\frac{4}{4!}\frac{\pi^4}{2^4}\frac{1}{9}t^9 -\frac{1}{6!}\frac{\pi^6}{2^6}\frac{1}{13}t^{13} +-+)$$

$$6. \qquad Y_K(t) = a{\cdot}\sqrt{\pi}(+\frac{1}{1!}\frac{\pi^1}{2^1}\frac{1}{3}t^3 -\frac{1}{3!}\frac{\pi^3}{2^3}\frac{1}{7}t^7 +\frac{1}{5!}\frac{\pi^5}{2^5}\frac{1}{11}t^{11} -\frac{1}{7!}\frac{\pi^7}{2^7}\frac{1}{15}t^{15} +-+)$$

durchgeführt wird, die nach einem vorgebbaren Glied abgebrochen wird, so dass Polynome gebildet werden.

4. Verfahren nach Anspruch 3, **dadurch gekennzeichnet, dass** die Glieder der Polynome in einer Tabelle gespeichert werden.

5. Verfahren nach einem der vorangehenden Ansprüche, **dadurch gekennzeichnet, dass** die Koordinaten der Einheitsklotoide in einer Tabelle gespeichert werden, aus denen alle Klotoiden der Navigationskarte abgeleitet werden.

6. Navigationskarte für ein Navigationsgerät, **dadurch gekennzeichnet, dass** Strassen, Wege, Bahnlinien, Flüsse, Seen und ähnliche kartographische Parameter aus Klotoiden zusammengesetzt sind.

7. Navigationskarte für ein Navigationsgerät, **dadurch gekennzeichnet, dass** die Klotoiden nach den Gleichungen

$$1. \qquad l=K{\cdot}a^2$$

$$2. \qquad x=a\sqrt{\pi}\int \cos(\frac{\pi}{2}\tau^2)\,\mathrm{d}\tau$$

3. $\quad y = a\sqrt{\pi}\int\sin(\frac{\pi}{2}\tau^2)d\tau$

mit

4. $\quad t=\dfrac{1}{a\sqrt{\pi}}l$

berechnet sind.

8. Navigationskarte für ein Navigationsgerät, **dadurch gekennzeichnet, dass** zur Berechnung der Klotoiden eine Reihenentwicklung der Gleichungen

5. $\quad X_K(t)=a\cdot\sqrt{\pi}(+\dfrac{1}{0!}\dfrac{\pi^0}{2^0}\dfrac{1}{1}t^1 -\dfrac{1}{2!}\dfrac{\pi^2}{2^2}\dfrac{1}{5}t^5 +\dfrac{1}{4!}\dfrac{\pi^4}{2^4}\dfrac{1}{9}t.^9 -\dfrac{1}{6!}\dfrac{\pi^6}{2^6}\dfrac{1}{13}t^{13} +-+)$

6. $\quad Y_K(t)=a\cdot\sqrt{\pi}(+\dfrac{1}{1!}\dfrac{\pi^1}{2^1}\dfrac{1}{3}t^3 -\dfrac{1}{3!}\dfrac{\pi^3}{2^3}\dfrac{1}{7}t^7 +\dfrac{1}{5!}\dfrac{\pi^5}{2^5}\dfrac{1}{11}t^{11} -\dfrac{1}{7!}\dfrac{\pi^7}{2^7}\dfrac{1}{15}t^{15} +-+)$

durchgeführt wird, die nach einem vorgebbaren Glied abgebrochen sind, so dass Polynome gebildet werden.

9. Navigationskarte für ein Navigationsgerät, **dadurch gekennzeichnet, dass** die Glieder der Polynome in einer Tabelle gespeichert sind.

10. Navigationskarte für ein Navigationsgerät, **dadurch gekennzeichnet, dass** die Koordinaten der Einheitsklotoide in einer Tabelle gespeichert sind, aus denen alle Klotoiden der Navigationskarte abgeleitet sind.

P3

P2 XYK

XYK

P1 XYK

Fig.1

P5 P6

P4

XY XY

P3 XY

XY

P2 XY

P1 XY

Fig.2

Europäisches Patentamt

**EUROPÄISCHER RECHERCHENBERICHT**

Nummer der Anmeldung

EP 01 12 5285

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 789 225 A (VOLKSWAGENWERK AG ;FRAUNHOFER INST (DE)) 13. August 1997 (1997-08-13) Zusammenfassung * Spalte 2, Zeile 7 – Spalte 2, Zeile 39; Anspruch 1; Abbildungen 1-3 * | 1,6 | G01C21/00 G06T11/20 |
| A | EP 1 045 224 A (DAIMLER CHRYSLER AG) 18. Oktober 2000 (2000-10-18) * Spalte 1, Zeile 1 – Spalte 13, Zeile 49; Anspruch 1; Abbildungen 1-5 * | 1-10 | |
| A | EP 0 921 509 A (NAVIGATION TECH CORP) 9. Juni 1999 (1999-06-09) Das ganze Dokument. | 1-10 | |

| RECHERCHIERTE SACHGEBIETE (Int.Cl.7) |
|---|
| G01C G06T G06K G08G |

Der vorliegende Recherchenbericht wurde für alle Patentansprüche erstellt

| Recherchenort | Abschlußdatum der Recherche | Prüfer |
|---|---|---|
| MÜNCHEN | 13. Februar 2002 | Fourrichon, P |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 12 5285

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0789225 | A | 13-08-1997 | DE | 19604364 A1 | 14-08-1997 |
| | | | EP | 0789225 A1 | 13-08-1997 |
| EP 1045224 | A | 18-10-2000 | DE | 19916967 C1 | 30-11-2000 |
| | | | AU | 2764100 A | 30-11-2000 |
| | | | EP | 1045224 A2 | 18-10-2000 |
| | | | JP | 2000321081 A | 24-11-2000 |
| EP 0921509 | A | 09-06-1999 | US | 6047234 A | 04-04-2000 |
| | | | EP | 0921509 A2 | 09-06-1999 |
| | | | JP | 11249552 A | 17-09-1999 |

EPO FORM P0461

Für nähere Einzelheiten zu diesem Anhang : siehe Amtsblatt des Europäischen Patentamts, Nr. 12/82